# EUROPÄISCHE PATENTSCHRIFT

(11) **EP 0 355 328 B1**
(45) Veröffentlichungstag und Bekanntmachung des Hinweises auf die Patenterteilung: **15.06.1994**
(21) Anmeldenummer: 89111947.1
(22) Anmeldetag: 30.06.1989
(51) Int. Cl.: H04B 7/08

(54) **Raumdiversity-Empfängerschaltung**
Space diversity receiving circuit
Circuit de réception à diversité d'espace

(30) Priorität: 25.08.1988 DE 3828817
(43) Veröffentlichungstag der Anmeldung: 28.02.1990
(73) Patentinhaber: ANT Nachrichtentechnik GmbH, D-71522 Backnang (DE)
(72) Erfinder: Sperlich, Josef, Dipl.-Ing., D-7150 Backnang (DE)

(56) Entgegenhaltungen:
- EP-A- 0 193 953
- NL-A- 8 702 753
- US-A- 3 528 012
- THE RADIO AND ELECTRONIC ENGINEER, Band 45, Nr. 7, Juli 1975, Seiten 357-367, London, GB; J.D. PARSONS et al.: "Diversity techniques for mobile radio reception"

## Beschreibung

Die vorliegende Erfindung betrifft eine Raumdiversity-Empfängerschaltung, welche einen an eine Antenne angeschlossenen Hauptempfangspfad und mindestens einen weiteren ebenfalls an eine Antenne angeschlossenen Nebenempfangspfad aufweist, wobei alle Empfangspfade zu einem Signalsummierer führen, und welche Schaltung einen Phasendiskriminator besitzt, der bei Ablage der Empfangssignalphase im Nebenempfangspfad von der Empfangssignalphase im Hauptempfangspfad einen Phasenschieber im Nebenempfangspfad so nachsteuert, daß die zum Signalsummierer gelangenden Empfangssignale möglichst phasengleich sind, und in den Empfangspfaden Mittel vorhanden sind, welche jeweils den (die) Empfangspfade mit zu schlechter Empfangsqualität vom Signalsummierer abschalten.

Insbesondere bei Mobilfunksystemen werden die Sendesignale von den mobilen Funkempfängern häufig nicht auf direktem Wege empfangen, sondern auf Umwegen nach Reflexionen an verschiedenen Hindernissen. Während der Fortbewegung eines mobilen Funkempfängers treten daher durch die Überlagerung der sich auf unterschiedlichen Wegen ausbreitenden Funkfelder sogenannte Fadings auf. Zur Verringerung solcher Fadings wird üblicherweise ein Diversity-Empfänger eingesetzt. Es gibt mehrere Diversity-Verfahren, von denen hier das Raumdiversity-Verfahren angewendet werden soll. Eine einleitend dargelegte Raumdiversity-Empfängerschaltung ist aus der NL-A-87 02 753 bekannt, und eine ebensolche Schaltung, allerdings ohne die Möglichkeit Empfangspfade mit zu schlechter Empfangsqualität abschalten zu können, geht aus der EP-A1-0 193 953 hervor.

Der Erfindung liegt die Aufgabe zugrunde, eine Raumdiversity-Empfängerschaltung der eingangs genannten Art anzugeben, die auch bei schlechten Übertragungsverhältnissen noch ein auswertbares Signal liefert.

Erfindungsgemäß wird diese Aufgabe durch die Merkmale des Anspruches 1 gelöst. Zweckmäßige Ausführungen der Erfindung gehen aus den Unteransprüchen hervor.

Dadurch, daß nach der Erfindung Empfangspfade mit sehr schlechter Empfangssignalqualität abgeschaltet werden, addiert sich bei der Signalsummierung auch nicht der hohe Rauschanteil von minderwertigen Empfangssignalen zu den weniger stark verrauschten Empfangssignalen eines oder mehrerer anderer Empfangssignalpfade. Somit erhält man auch bei ungünstigen Übertragungseigenschaften oft noch ein gut auswertbares Summensignal.

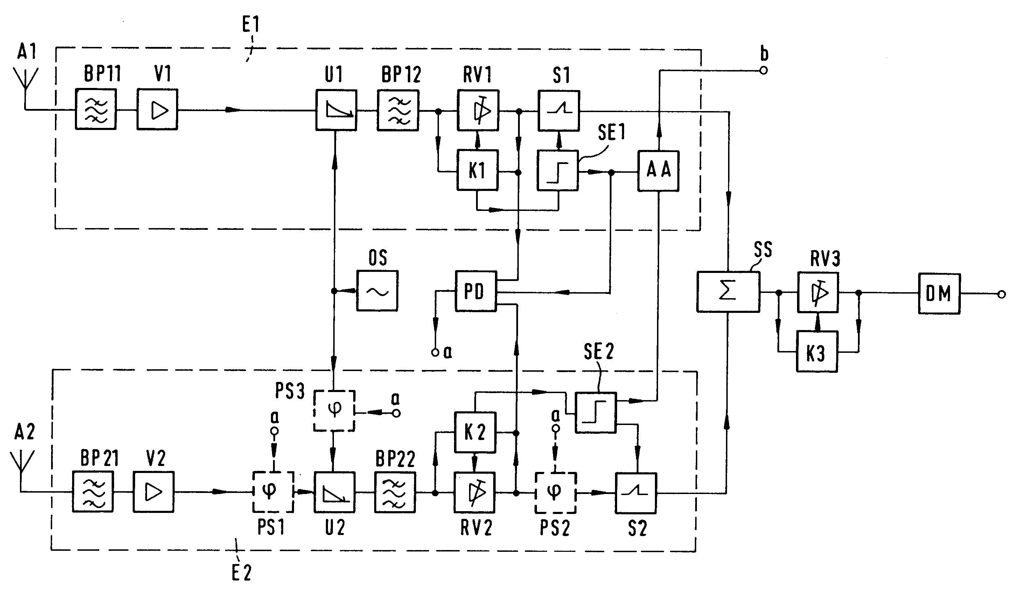

Anhand eines in der Zeichnung dargestellten Ausführungsbeispiels wird nun die Erfindung näher erläutert.

Die der Zeichnung zu entnehmende Raumdiversity-Empfängerschaltung besitzt einen Hauptempfangspfad E1 und einen Nebenempfangspfad E2. Statt nur einen Nebenempfangspfad vorzusehen, ist es u.U. zweckmäßig, mehrere solcher Nebenempfangspfade zusammen mit dem Hauptempfangspfad E1 auf einen Signalsummierer SS zu schalten. Da alle Nebenempfangspfade gleich aufzubauen wären, dürfte eine Raumdiversity-Empfängerschaltung mit mehreren Nebenempfangspfaden ohne weiteres aus dem hier beschriebenen Ausführungsbeispiel mit nur einem Nebenempfangspfad herleitbar sein.

Der Hauptempfangspfad E1 und der Nebenempfangspfad E2 besitzen im wesentlichen die gleichen Schaltungselemente. Jeder Empfangspfad E1 bzw. E2 ist an eine Empfangsantenne A1 bzw. A2 angeschlossen. An dem Ausgang der Antenne A1 bzw. A2 sind ein Bandpaß BP11 bzw. BP21 und ein Vorverstärker V1 bzw. V2 angeschaltet. Der Bandpaß BP11 bzw. BP21 ist so dimensioniert, daß er das gesamte Empfangsfrequenzband, das in der Regel in mehrere Teilfrequenzbänder aufgeteilt ist, durchläßt. Nach dem Vorverstärker V1 bzw. V2 folgt ein Zwischenfrequenzumsetzer U1, der seine Umsetzfrequenz von einem Oszillator OS bezieht. Er ist in seiner Frequenz so verstellbar, daß jedes der Teilfrequenzbänder in die Zwischenfrequenzlage umgesetzt werden kann. Der dem Zwischenfrequenzumsetzer U1 bzw. U2 nachgeschaltete Bandpaß BP12 bzw. BP22 ist auf die Bandbreite der Teilfrequenzbänder abgestimmt. Das in die Zwischenfrequenzlage umgesetzte Empfangssignal eines jeden Empfangssignalpfades E1 bzw. E2 wird einem Regelverstärker (AGC) RV1 bzw. RV2 zugeführt. Dieser wird von einem Komparator K1 bzw. K2 angesteuert. Der Komparator K1 bzw. K2 leitet entweder nur aus dem Ausgangssignalpegel des Regelverstärkers RV1 bzw. RV2 eine Regelgröße für dessen Verstärkung ab. Dem Komparator K1 bzw. K2 kann aber auch, wie dem Ausführungsbeispiel zu entnehmen ist, das Eingangssignal des Regelverstärkers RV1 bzw. RV2 als Regelkriterium zugeführt werden. Das Eingangssignal wird vom Komparator K1 bzw. K2 überwacht, und er veranlaßt z.B. den Regelverstärker RV1 bzw. RV2 rasch hochzuregeln, wenn nach einem Ausbleiben des Eingangssignals dieses plötzlich wiedererscheint. Der Komparator K1 bzw. K2 kann gegebenenfalls auch das Erreichen eines maximal zulässigen Eingangssignalpegels detektieren, um einen Fehler zu signalisieren, wenn bei Überschreiten des maximal zulässigen Eingangssignalpegels der Regelverstärker RV1 bzw. RV2 in seinem nichtlinearen Bereich betrieben wird.

Der Komparator K1 bzw. K2 gibt sein aus dem Empfangssignal abgeleitetes Regelsignal auch an einen Schwellwertentscheider SE1 bzw. SE2 weiter. Liegt dieses Regelsignal, welches ein Maß für die Amplitude bzw. die Qualität (z.B. das Signal-Rauschleistungsverhältnis) des Empfangssignals ist, unterhalb der im Schwellwertentscheider SE1 bzw. SE2 vorgegebenen Abschaltschwelle, so gibt der Schwellwertentscheider SE1 bzw. SE2 ein Steuersignal an einen Schalter S1 bzw. S2 ab, der den entsprechenden Empfangspfad E1 bzw. E2 unterbricht. Damit wird vermieden, daß im Signalsummierer SS ein stark verrauschtes, nicht mehr auswertbares Empfangssignal eines Empfangspfades einem qualitativ besseren Empfangssignal eines anderen Empfangspfades überlagert wird. Das nicht so stark verrauschte Empfangssignal allein läßt sich noch mit einer verträglichen Fehlerrate demodulieren. Durch die Überlagerung mit dem stark verrauschten Empfangssignal ginge es aber selbst auch im Rauschen unter und wäre nicht mehr demodulierbar. Werden sämtliche Empfangspfade wegen zu schlechter Qualität der Empfangssignale abgeschaltet, so wird dieser Zustand von einer Abschaltauswertung AA an ihren Ausgang b signalisiert.

Der Schwellwertentscheider SE1 bzw. SE2 besitzt eine gegenüber der Abschaltschwelle versetzte Einschaltschwelle, bei deren Überschreiten durch das vom Komparator K1 bzw. K2 abgegebene Regelsignal der Schalter S1 bzw. S2 wieder eingeschaltet wird. Es wird dadurch also eine Schalthysterese erzeugt, um ein "Flattern" des Schalters S1 bzw. S2 zu vermeiden.

Haben die Empfangssignale auf allen Empfangspfaden E1 und E2 ausreichend gute Qualität, so entsteht dann am Ausgang des Signalsummierers SS ein optimal auswertbares Summensignal, wenn die Empfangssignale an den Eingängen des Signalsummierers SS eine möglichst geringe gegenseitige Phasenablage aufweisen. Um dieser Forderung nachzukommen, ist ein Phasendiskriminator PD vorhanden, der die Phasendifferenz der Empfangssignale an den Augängen der Regelverstärker RV1 und RV2 der beiden Empfangspfade E1 und E2 detektiert. Das der Phasendifferenz proportionale Ausgangssignal des Phasendiskriminators PD steuert einen in den Nebenempfangspfad E2 eingefügten Phasenschieber PS1, PS2 oder PS3 so, daß das Empfangssignal des Nebenempfangspfades die gleiche Phase hat wie das Empfangssignal des Hauptempfangspfades. Die Zeichnung verdeutlicht, daß es drei geeignete Stellen im Nebenempfangspfad für den Einsatz eines mit seinem Steuereingang an den Ausgang a des Phasendiskriminators PD angeschlossenen Phasenschiebers PS1, PS2 oder PS3 gibt. Der Phasenschieber PS1 kann z.B. vor den Zwischenfrequenzumsetzer U2 geschaltet sein. Ein anderer geeigneter Ort für den Phasenschieber PS2 ist nach dem Regelverstärker RV2, wo das in die Zwischenfrequenz ungesetzte Empfangssignal vorliegt. Ein weiterer möglicher Einsatzort für den Phasenschieber PS3 ist die Zuführungsleitung der Umsetzfrequenz für den Zwischenfrequenzumsetzer U2. Die auf diese Weise phasengleich oder zumindest annähernd phasengleich gemachten Empfangssignale werden in dem Signalsummierer SS einander überlagert, und das Summensignal wird schließlich einem Demodulator DM zugeführt. Ein dem Signalsummierer SS nachgeschalteter Regelverstärker RV3, der in gleicher Weise wie die oben beschriebenen Regelverstärker RV1 und RV2 von einem Komparator K3 ein Regelkriterium erhält, dient insbesondere dazu, Pegelschwankungen auszugleichen, die beim Ab- und Einschalten des einen oder anderen Empfangspfades auftreten. Die Schalter R1, R2 in den Empfangspfaden bewirken kein abruptes sondern ein kontinuierliches Ein- und Abschalten mit einer auf die Regelgeschwindigkeit des Regelverstärkers RV3 abgestimmten Zeitkonstanten.

Sollte wegen mangelnder Empfangssignalqualität der Hauptempfangspfad E1 abgeschaltet werden, bewirkt der Phasendiskriminator PD, daß die augenblickliche Phase des Phasenschiebers PS1, PS2 oder PS3 im Nebenempfangspfad festgehalten und während der Abschaltzeit nicht verändert wird. Da in diesem Fall der Hauptpfad verrauschte Signale führt, kann dies zu unkontrollierten Regelvorgängen im Phasendiskriminator führen, wodurch die Phase des in die Zwischenfrequenz umgesetzten Signals nicht nur vom empfangenen Signal, sondern auch von den unkontrollierten Regelvorgängen des Phasendiskriminators beeinflußt würde, was zu Fehlentscheidungen im Demodulator führt.

## Patentansprüche

1. Raumdiversity-Empfängerschaltung, welche einen an eine Antenne (A1) angeschlossenen Hauptempfangspfad (E1) und mindestens einen weiteren ebenfalls an eine Antenne (A2) angeschlossenen Nebenempfangspfad (E2) aufweist, wobei alle Empfangspfade (E1, E2) zu einem Signalsummierer (SS) führen, und welche Schaltung einen Phasendiskriminator (PD) besitzt, der bei Ablage der Empfangssignalphase im Nebenempfangspfad (E2) von der Empfangssignalphase im Hauptempfangspfad (E1) einen Phasenschieber (PS1, PS2, PS3) im Nebenempfangspfad (E2) so nachsteuert, daß die zum Signalsummierer (SS) gelangenden Empfangssignale möglichst phasengleich sind, und in den Empfangspfaden (E1, E2) Mittel (S1, S2) vorhanden sind, welche jeweils den (die) Empfangspfad(e) (E1, E2) mit zu schlechter Empfangssignalqualität vom Signalsummierer (SS) abschalten, dadurch gekennzeichnet, daß der Phasendiskriminator (PD) die Phase des Phasenschiebers (PS1, PS2, PS3) im Nebenempfangspfad (E2) unverändert festhält, wenn es zu einer Abschaltung des Hauptempfangspfades kommt.

2. Raumdiversity-Empfängerschaltung nach Anspruch 1, dadurch gekennzeichnet, daß der Phasenschieber (PS1) im Nebenempfangspfad (E2) vor einer das Empfangssignal in eine Zwischenfrequenz umsetzenden Schaltung (U2) angeordnet ist.

3. Raumdiversity-Empfängerschaltung nach Anspruch 1, dadurch gekennzeichnet, daß der Phasenschieber (PS2) im Nebenempfangspfad (E2) nach einer das Empfangssignal in eine Zwischenfrequenz umsetzenden Schaltung (U2) angeordnet ist.

4. Raumdiversity-Empfängerschaltung nach Anspruch 1, dadurch gekennzeichnet, daß der Phasenschieber (PS3) im Nebenempfangspfad (E2) in der Referenzfrequenz-Zuführungsleitung einer das Empfangssignal in eine Zwischenfrequenz umsetzenden Schaltung (U2) angeordnet ist.

5. Raumdiversity-Empfängerschaltung nach Anspruch 1, dadurch gekennzeichnet, daß die Schaltmittel (S1, S2) in ihrem Ein- und Ausschaltverhalten auf das Regelverhalten eines dem Signalsummierer (SS) nachgeschalteten Regelverstarkers (RV3) abgestimmt sind.

6. Raumdiversity-Empfängerschaltung nach Anspruch 1, dadurch gekennzeichnet, daß die Aus- und Einschaltung der Schaltmittel (S1, S2) mit einer Hysterese erfolgt.

## Claims

1. A space diversity receiving circuit having a primary receiving path (E1) connected to an antenna (A1) and at least one further secondary receiving path (E2) that is likewise connected to an antenna (A2), wherein all receiving paths (E1, E2) lead to a signal summer (SS), said circuit having a phase discriminator (PD) that adjusts a phase shifter (PS1, PS2, PS3) in the secondary receiving path (E2) when there is a displacement between the receiving signal phase of the primary receiving path (E1) and the receiving signal phase of the secondary receiving path (E2) such that the receiving signals reaching the signal summer (SS) are as much in phase as possible, and means (S1, S2) are present in the receiving paths (E1, E2) that respectively disconnect the receiving path(s) (E1, E2) from the signal summer (SS) when the receiving signal quality is unacceptably poor, characterized in that the phase discriminator (PD) maintains the phase of the phase shifter (PS1, PS2, PS3) in the secondary receiving path (E2) unchanged when the primary receiving path is disconnected.

2. The space diversity receiving circuit as defined by claim 1, characterized in that the phase shifter (PS1) in the secondary receiving path (E2) is disposed upstream of a circuit (U2) that converts the receiving signal into an intermediate frequency.

3. The space diversity receiving circuit as defined by claim 1, characterized in that the phase shifter (PS2) in the secondary receiving path (E2) is disposed downstream of a circuit (U2) that converts the receiving signal into an intermediate frequency.

4. The space diversity receiving circuit as defined by claim 1, characterized in that the phase shifter (PS3) in the secondary receiving path (E2) is disposed in the reference frequency supply line of a circuit (U2) that converts the receiving signal into an intermediate frequency.

5. The space diversity receiving circuit as defined by claim 1, characterized in that the switching means (S1, S2) are tuned in their connecting and disconnecting behavior to the regulating behavior of a variable-gain amplifier (RV3) disposed downstream of the signal summer (SS).

6. The space diversity receiving circuit as defined by claim 1, characterized in that the connection and disconnection of the switching means (S1, S2) is effected with hysteresis.

## Revendications

1. Circuit de réception à diversité d'espace qui comporte une voie de réception principale (E1) raccordée à une antenne (A1) et au moins une autre voie de réception auxiliaire (E2) raccordée elle aussi à une antenne (A2), toutes les voies de réceptions (E1, E2) conduisant à un additionneur de signaux (SS), lequel circuit possède un discriminateur de phase (PD) qui, lors d'une dérive de la phase du signal de réception dans la voie de réception auxiliaire (E2) par rapport à la phase du signal de réception dans la voie de réception principale (E1), commande un déphaseur (PS1, PS2, PS3) dans la voie de réception auxiliaire (E2) de telle manière que les signaux de réception qui parviennent à l'additionneur de signaux (SS) présentent des phases les plus identiques possible, des dispositifs (S1, S2) étant prévus dans les voies de réception (E1, E2) qui déconnectent de l'additionneur de signaux (SS) la ou les voies de réception (E1, E2) de qualité des signaux de réception trop mauvaise, caractérisé en ce que le discriminateur de phase (PD) maintient non modifiée la phase du déphaseur (PS1, PS2, PS3) dans la voie de réception auxiliaire (E2) en cas de déconnexion de la voie de réception principale.

2. Circuit de réception à diversité d'espace selon la revendication 1, caractérisé en ce que le déphaseur (PS1) est disposé dans la voie de réception auxiliaire (E2) en amont d'un circuit (U2) qui fait passer le signal de réception dans une fréquence intermédiaire.

3. Circuit de réception à diversité d'espace selon la revendication 1, caractérisé en ce que le déphaseur (PS2) est disposé dans la voie de réception auxiliaire (E2) en aval d'un circuit (U2) qui fait passer le signal de réception dans une fréquence intermédiaire.

4. Circuit de réception à diversité d'espace selon la revendication 1, caractérisé en ce que le déphaseur (PS3) est disposé dans la voie de réception auxiliaire (E2) dans le conducteur d'amenée de fréquence de référence d'un circuit (U2) qui fait passer le signal de réception dans une fréquence intermédiaire.

5. Circuit de réception à diversité d'espace selon la revendication 1, caractérisé en ce que les dispositifs de commutation (S1, S2) sont adaptés, en ce qui concerne leur comportement de connexion et de déconnexion, au comportement de régulation d'un amplificateur de régulation (RV3) branché en aval de l'additionneur de signaux (SS).

6. Circuit de réception à diversité d'espace selon la revendication 1, caractérisé en ce que la déconnexion et la connexion des dispositifs de commutation (S1, S2) se font avec une hystérésis.
